(19) Europäisches Patentamt
European Patent Office
Office européen des brevets

(11) Numéro de publication: 0 327 423 B1

(12) **FASCICULE DE BREVET EUROPEEN**

(45) Date de publication de fascicule du brevet: **27.04.94**

(51) Int. Cl.5: **C08G 63/91**, C10L 1/22

(21) Numéro de dépôt: **89400181.7**

(22) Date de dépôt: **23.01.89**

(54) **Polymères dérivés de polyesters insaturés par addition de composés à fonction amine et leur utilisation comme additifs de modification des propriétés à froid de distillats moyens de pétrole.**

(30) Priorité: **03.02.88 FR 8801327**

(43) Date de publication de la demande:
**09.08.89 Bulletin 89/32**

(45) Mention de la délivrance du brevet:
**27.04.94 Bulletin 94/17**

(84) Etats contractants désignés:
**BE CH DE ES GB IT LI NL SE**

(56) Documents cités:
**EP-A- 0 060 505**
**EP-A- 0 115 072**
**EP-A- 0 271 385**
**FR-A- 1 365 866**
**FR-A- 1 382 162**
**FR-A- 2 042 558**
**US-A- 2 822 350**
**US-A- 2 969 335**
**US-A- 3 715 335**
**US-A- 4 135 887**
**US-A- 4 643 737**

(73) Titulaire: **INSTITUT FRANCAIS DU PETROLE**
**4, Avenue de Bois Préau**
**F-92502 Rueil-Malmaison(FR)**

Titulaire: **ELF FRANCE**
**2 place de la Coupole**
**La Défense 6**
**F-92400 Courbevoie(FR)**

(72) Inventeur: **Denis, Jacques**
**Les Chênes**
**18, Chemin Grandes Bruyères**
**F-69260 Charbonnière les Bains(FR)**
Inventeur: **Garapon, Jacques**
**64, Rue des Aqueducs**
**F-69005 Lyon(FR)**
Inventeur: **Damin, Bernard**
**162, Grande Rue**
**F-69600 Oullins(FR)**
Inventeur: **Léger, Robert**
**Rue Pierre Semard**
**5, Résidence Cazardes**
**F-69520 Grigny(FR)**

EP 0 327 423 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne des polymères modifiés comportant des groupements latéraux amino-substitués dérivés de composés à fonction amine primaire.

Les polymères de la présente invention sont en particulier utilisables comme additifs permettant l'amélioration des propriétés d'écoulement à froid des distillats moyens de pétrole (fuels et gazoles).

Les polymères modifiés de la présente invention résultent de la réaction d'au moins un composé à fonction amine primaire répondant à l'une des formules générales (III) ou (IV) décrites ci-après, sur un polymère de condensation (polyester insaturé) résultant de la condensation d'au moins un composé aliphatique insaturé dicarboxylique, de préférence vicinal, comportant au moins une insaturation éthylénique en alpha de l'un des groupes carboxyliques (dénommé ci-après composé dicarboxylique) ayant habituellement de 4 à 60 atomes de carbone, de préférence de 4 à 30 atomes de carbone et le plus souvent de 4 à 8 atomes de carbone dans sa molécule, sur au moins un époxyde aliphatique (dénommé ci-après composé époxydé) répondant à l'une des formules générales (I) ou (II) décrites ci-après.

On a découvert, de façon surprenante, que les polymères modifiés de la présente invention sont des additifs permettant une amélioration importante des propriétés d'écoulement à froid des distillats moyens d'hydrocarbures, en particulier une amélioration du point d'écoulement et/ou du point de trouble des gazoles.

Les polymères de condensation servant à préparer les polymères modifiés de la présente invention sont obtenus par les méthodes classiques de préparation des polymères de condensation bien connues de l'homme du métier.

Le composé dicarboxylique que l'on emploie dans la présente invention est habituellement, de préférence, un composé monoinsaturé de 4 à 8 atomes de carbone par molécule, par exemple l'acide maléique, l'acide fumarique, l'acide itaconique, l'acide citraconique, l'acide mésaconique et l'acide glutaconique.

Le composé dicarboxylique est de préférence un anhydride cyclique monoinsaturé tel que par exemple l'anhydride maléique, les anhydrides alkylmaléiques et les anhydrides alcényl-succiniques.

Dans le cadre de l'invention, les anhydrides préférés sont l'anhydride maléique, l'anhydride citraconique (méthylmaléique) et l'anhydride itaconique (méthylène-succinique).

Le composé époxydé utilisé dans le cadre de la présente invention est un composé ayant habituellement de 4 à 62 atomes de carbone, de préférence de 4 à 40 atomes de carbone, le plus souvent de 6 à 40 atomes de carbone et avantageusement de 8 à 40 atomes de carbone dans sa molécule.

Dans le cadre de la présente invention on utilise de préférence des composés monoépoxydés ou des mélanges de composés époxydés comprenant de préférence une proportion d'au moins 50 % en mole de composés monoépoxydés et contenant des composés comprenant plusieurs groupes époxydes (cycles oxirannes) dans leur molécule, par exemple deux ou trois groupes époxydes. La proportion molaire de ces composés, dénommés composés polyépoxydés, dans le mélange des composés époxydés est habituellement inférieure à 50 %, de préférence inférieure à 40 % et de manière avantageuse inférieure à 30 %.

Les composés époxydés aliphatiques utilisés dans la présente invention répondent à l'une des formules générales suivantes :

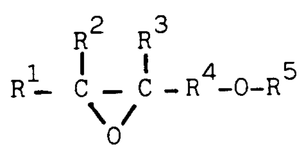

(I) et

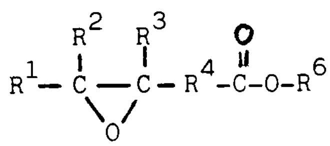

(II)

dans lesquelles $R^1$ et $R^3$, identiques ou différents, représentent chacun un atome d'hydrogène ou un groupe alkyle inférieur ayant par exemple de 1 à 4 atomes de carbone, tel que méthyle, éthyle, propyles et butyles ; $R^2$ représente un atome d'hydrogène, un groupe alkyle, de préférence sensiblement linéaire, ayant de 1 à 57 atomes de carbone, de préférence de 1 à 35 atomes de carbone ou un groupe aliphatique, de préférence sensiblement linéaire, comportant un ou plusieurs cycles oxirannes dans la chaîne et ayant de 3

à 57 atomes de carbone, de préférence de 3 à 35 atomes de carbone et plus particulièrement de 4 à 35 atomes de carbone ; $R^4$ représente un groupe alkylène, de préférence sensiblement linéaire, ayant de 1 à 57 atomes de carbone, de préférence de 1 à 35 atomes de carbone ; $R^5$ représente un groupe alkyle, de préférence sensiblement linéaire, ayant de 1 à 57 atomes de carbone, de préférence de 1 à 35 atomes de carbone et plus particulièrement de 4 à 35 atomes de carbone ou un groupe alkanoyle, de formule $R^6$-C- ; $R^6$ représente dans ces formules un groupe alkyle, de préférence sensiblement linéaire, ayant de 1 à 56 atomes de carbone, de préférence de 1 à 34 atomes de carbone et plus particulièrement de 4 à 34 atomes de carbone.

Les composés époxydés préférés sont ceux dans lesquels $R^1$ et $R^3$ représentent chacun un atome d'hydrogène ainsi que ceux dans lesquels $R^1$, $R^2$ et $R^3$ représentent chacun un atome d'hydrogène.

A titre d'exemples de composés époxydés préférés on peut citer les composés dans lesquels $R^1$ et $R^3$ représentent chacun un atome d'hydrogène et $R^2$ représente un atome d'hydrogène, un groupe alkyle, de préférence sensiblement linéaire ayant de 6 à 35 atomes de carbone ou un groupe aliphatique, de préférence sensiblement linéaire, comportant un ou plusieurs cycles oxirannes de formule

$$R^{7}-(\underset{\diagdown O \diagup}{C - C}-\ R^{8}\ -)_{q}$$

dans laquelle $R^7$ est un groupe alkyle, de préférence sensiblement linéaire, ayant de 1 à 54 atomes de carbone, de préférence de 1 à 32 atomes de carbone, $R^8$ est un groupe alkylène, de préférence sensiblement liénaire, ayant de 1 à 54 atomes de carbone, de préférence de 1 à 32 atomes de carbone et q est un nombre entier de 1 à 5, de préférence de 1 à 3, les groupes $R^4$, $R^5$ et $R^6$ ayant les définitions données ci-avant.

A titre de composés préférés, parmi ceux mentionnés ci-avant, on peut citer les composés époxydés de formule (I) dans lesquels $R^4$ représente un groupe méthylène et les composés époxydés de formule (II) dans lesquels $R^4$ représente un groupe alkylène ayant de 4 à 24 atomes de carbone.

A titre d'exemples spécifiques de composés monoépoxydés aliphatiques on peut citer :
l'éthoxy-3 époxy-1,2 propane, le propoxy-3 époxy-1,2 propane, le butoxy-3 époxy-1,2 propane, le pentyloxy-3 époxy-1,2 propane, l'hexyloxy-3 époxy-1,2 propane, l'heptyloxy-3 époxy-1,2 propane, l'octyloxy-3 époxy-1,2 propane, le décyloxy-3 époxy-1,2 propane, le dodécyloxy-3 époxy-1,2 propane, l'acétoxy-1 époxy-2,3 propane, le butyryloxy-1 époxy-2,3 propane, le lauroyloxy-1 époxy-2,3 propane, le myristoyloxy-3 époxy-1,2 propane, le palmitoyloxy-3 époxy-1,2 propane, le stéaroyloxy-3 époxy-1,2 propane, les esters alkyliques, par exemple méthylique, éthylique, propyliques, butyliques, éthyl-2 hexylique et et hexadécyliques des acides époxy-3,4 butanoïque, époxy-4,5 pentanoïque, époxy-3,4 nonanoïque, époxy-10,11 undécanoïque, époxy-6,7 octadécanoïque, époxy-12,13 octadécanoïque, époxy-11,12 octadécanoïque, époxy-9,10 octadécanoïque, époxy-11,12 eicosanoïque et époxy-13,14 docosanoïque.

A titre d'exemples spécifiques de mélanges de composés époxydés comprenant des polyépoxydes on peut citer le mélange d'esters alkyliques obtenu par estérification d'un mélange d'époxyacides résultant de l'époxydation d'un mélange d'acides gras éthyléniquement insaturés. Le mélange d'acides gras éthyléniquement insaturés est par exemple un mélange comportant, en proportions pondérales approximatives données dans le tableau I, ci-après, des acides ayant de 12 à 20 atomes de carbone dans leur molécule et contenant des acides saturés et insaturés. Ce mélange est habituellement dénommé oléine.

Tableau I

| ACIDES | $C^*_{12}$ | $C^*_{14}$ | $C_{14.1}$ | $C^*_{15}$ | $C^*_{16}$ | $C_{16.1}$ | $C_{17.1}$ | $C^*_{18}$ | $C_{18.1}$ | $C_{18.2}$ | $C_{18.3}$ | $C_{20.1}$ |
|---|---|---|---|---|---|---|---|---|---|---|---|---|
| %Poids | 0,8 | 2,7 | 1,0 | 0,5 | 5,0 | 5,5 | 1,5 | 1,5 | 68,0 | 10,0 | 2,5 | 1,0 |

* acides saturés

Dans le tableau I ci-avant $C_{p.1}$ désigne des acides comportant une insaturation éthylénique, $C_{p.2}$ désigne des acides comportant 2 insaturations éthyléniques et $C_{p.3}$ désigne des acides comportant 3

insaturations éthyléniques (p est le nombre d'atomes de carbone).
Pour l'estérification du mélange d'époxyacides on utilise par exemple un mélange d'alcools comprenant, en proportion pondérales approximatives, 95 % d'alcools n-hexadécylique, 3 % d'alcool n-octadécylique et 2 % d'alcool ayant plus de 18 atomes de carbone dans leur molécule. Il doit être entendu qu'il est possible de mettre en jeu comme composé époxydé un ou plusieurs composés répondant à la formule (I) et/ou un ou plusieurs composés répondant à la formule (II).

Le polyester insaturé est habituellement obtenu en faisant réagir au moins un composé dicarboxylique (tel que défini ci-dessus) avec au moins un composé époxydé (tel que défini ci-dessus) en présence d'un catalyseur de condensation, par exemple un acide fort ou un sel de titane par exemple un titanate d'alkyle en particulier le titanate de n-butyle.

La condensation entre au moins en composé dicarboxylique et au moins un composé époxydé peut être effectuée en présence ou en absence de solvant. On peut par exemple utiliser un solvant hydrocarboné tel que le benzène, l'hexane, le cyclohexane, le toluène, le xylène ou un mélange d'hydrocarbures tel que par exemple une coupe hydrocarbonée à point d'ébullition élevé telle qu'un kérosène ou un gazole.
La réaction de condensation est habituellement effectuée à une température d'environ 30 à 200 °C et de préférence d'environ 50 à 160 °C pendant environ 30 minutes à environ 30 heures et de préférence pendant environ 2 heures à environ 15 heures.

La condensation entre la composé dicarboxylique et le composé époxydé est effectuée en employant des quantités de chacun de ces composés telles que le rapport molaire composé époxydé/composé dicarboxylique soit habituellement d'environ 0,4:1 à 1,8:1 et de préférence d'environ 0,8:1 à environ 1,2:1 et plus particulièrement d'environ 0,9:1 à environ 1,1:1.

Le polyester insaturé, ainsi obtenu, est ensuite mis en réaction avec au moins un composé à fonction amine primaire tel que défini ci-après. La réaction est habituellement effectuée en présence d'un solvant qui peut être identique ou différent de celui utilisé dans l'étape de préparation du polyester insaturé.

Lorsque le solvant utilisé dans cette réaction d'addition du composé à fonction amine est le même que celui employé lors de la formation du polyester, il est possible de ne pas isoler le polyester et d'effectuer la réaction sur le produit brut de polycondensation, éventuellement après avoir enlevé le catalyseur employé pour la polycondensation.

Lorsque la polycondensation a été effectuée sans employer de solvant, le polyester est de préférence d'abord dissous avec une quantité de solvant représentant habituellement en poids le poids du polyester formé, puis on effectue la réaction d'addition avec le composé à fonction amine primaire.

Les composés à fonction amine primaire que l'on utilise comprennent habituellement de 1 à 61 atomes de carbone, de préférence de 6 à 47 atomes de carbone et plus particulièrement de 8 à 47 atomes de carbone dans leur molécule. Ces composés à fonction amine primaire répondent à l'une des formules générales suivantes :

$$R^9 - Z \left[ (CH_2)_n \; NH \right]_m H$$

(IV) $HO - R^{10} - NH_2$

dans lesquelles $R^9$ représente un groupe aliphatique, ayant de 1 à 60 atomes de carbone, de préférence de 6 à 46 atomes de carbone, de préférence saturé ; Z est choisi parmi les groupes -O-, -NH- et $-NR^{11}-$, dans lesquels $R^{11}$ représente un groupe aliphatique, de préférence saturé, ayant de 1 à 60 atomes de carbone, de préférence de 6 à 40 atomes de carbone et préférentiellement $R^{11}$ est un groupe sensiblement linéaire ; n est un nombre entier de 2 à 4 ; m est zéro lorsque Z est -NH- ou un nombre entier de 1 à 4 dans tous les cas ; $R^{10}$ représente un groupe aliphatique, de préférence saturé, divalent ayant de 2 à 61 atomes de carbone, de préférence de 6 à 47 atomes de carbone et plus particulièrement de 8 à 47 atomes de carbone.

Les composés de formule (III) ci-dessus peuvent consister en des monoalkyl-amines primaires de formule $R^9-NH_2$ (dans ce cas, dans la formule (I), Z représente le groupement -NH-, et la valeur de m est zéro).
De préférence le groupe $R^9$ est sensiblement linéaire et renferme de 6 à 46 atomes de carbone et d'une manière préférée de 8 à 46 atomes de carbone et plus avantageusement de 10 à 46 atomes de carbone.

Comme exemples spécifiques de ces amines, on peut citer, à titre d'exemples : la méthylamine, l'éthylamine, la propylamine, la butylamine, la pentylamine, l'hexylamine, l'heptylamine, l'octylamine, la nonylamine, la décylamine, la dodécylamine, la tétradécylamine, l'hexadecylamine, l'octadécylamine; l'éicosylamine et la docosylamine.

Les composés de formule (III) peuvent encore consister en des polyamines aliphatiques de préférence saturées répondant à la formule :

$$R^9 - NH \left[ (CH_2)_n \; NH \right]_m H$$

qui correspond à la formule générale (III) dans laquelle Z représente le groupement -NH- ; m peut avoir une valeur de 1 à 4 et n une valeur de 2 à 4, de préférence 3.

$R^9$ a la définition donnée ci-avant. Le nombre d'atomes de carbone de la polyamine employée etant habituellement de 3 à 61, de préférence de 6 à 47, plus particulièrement de 8 à 47 et plus avantageusement de 10 à 47.

Comme composés spécifiques, on peut citer à titre d'exemples les N-alkyl diamino-1,3 propane dans lesquels le groupe alkyle comporte de 5 à 24 atomes de carbone et de préférence de 7 à 24 atomes de carbone par exemple le N-dodécyl diamino-1,3 propane, le N-tétradécyl diamino-1,3 propane, le N-hexadécyl diamino-1,3 propane, le N-octadécyl diamino-1,3 propane, le N-eicosyl diamino-1,3 propane et le N-docosyl diamino-1,3 propane ; on peut également citer les N-alkyl dipropylène triamines dans lesquelles le groupe alkyle comporte de 2 à 24 atomes de carbone et par exemple parmi les composés dont le groupe alkyle comporte de 12 à 24 atomes de carbone, la N-hexadécyldipropylène triamine, la N-octadécyldipropylène triamine, la N-eicosyldipropylène triamine et la N-docosyldipropylène triamine.

Les composés de formule (III) peuvent également consister en des polyamines répondant à la formule :

$$\begin{matrix} R^9 \diagdown \\ R^{11} \diagup \end{matrix} N \left[ (CH_2)_n \; NH \right]_m H$$

correspondant à la formule générale (III) où Z représente -NR$^{11}$- et où $R^9$ et $R^{11}$, identiques ou différents, représentant chacun un groupe alkyle ayant de 1 à 60 atomes de carbone, de préférence de 6 à 40 atomes de carbone, $R^9$ et $R^{11}$ renfermant habituellement à eux deux de 7 à 61 atomes de carbone et de préférence de 8 à 46 atomes de carbone ; n a une valeur entière de 2 à 4 et m une valeur entière de 1 à 4 ; $R^9$ et $R^{11}$ sont de préférence sensiblement linéaires.

Comme composés spécifiques, on peut citer à titre d'exemples le N,N-diéthyl diamino-1,2 éthane, le N,N-diisopropyl diamino-1,2 éthane, le N,N-dibutyl diamino-1,2 éthane, le N,N-diéthyl diamino-1,4 butane, le N-N-diméthyl diamino-1,3 propane, le N,N-diéthyl diamino-1,3 propane, le N,N-dioctyl diamino-1,3 propane, le N,N-didécyl diamino-1,3 propane, le N,N-didodécyl diamino-1,3 propane, le N,N-ditétradécyl diamino-1,3 propane, le N,N-dihexadécyl diamino-1,3 propane, le N,N-dioctadécyl diamino-1,3 propane, la N,N-didodécyldipropylènetriamine, la N,N-ditétradécyldipropylène triamine, la N,N-dihexadécyldipropylène triamine, la N,N-dioctadécyldipropylène triamine, le N-méthyl N-butyl diamino-1,2 éthane, le N-méthyl N-octyl diamino-1,2 éthane, le N-éthyl N-octyl diamino-1,2 éthane, le N-méthyl N-décyl diamino-1,2 éthane, le N-méthyl N-dodécyl diamino 1,3 propane, le N-méthyl N-hexadécyl diamino-1,3 propane et le N-éthyl N-octadécyl diamino-1,3 propane.

Enfin, les composés de formule (III) peuvent consister en des éther-amines répondant plus particulièrement à la formule :

$$R^9 - O \left[ (CH_2)_n \; NH \right]_m H$$

qui correspond à la formule générale (III) dans laquelle Z est un atome d'oxygène ; de préférence, le radical $R^9$ est sensiblement linéaire et a la définition donnée ci-avant, m est un nombre entier de 1 à 4 et n un nombre entier de 2 à 4, préférentiellement 2 ou 3.

Parmi les alkyl-éther-amines, on peut citer à titre d'exemples de composés spécifiques : la méthoxy-2 éthylamine, la méthoxy-3 propylamine, la méthoxy-4 butylamine, l'éthoxy-3 propylamine, l'octyloxy-3 propylamine, la décyloxy-3 propylamine, l'hexadécyloxy-3 propylamine, l'éicosyloxy-3 propylamine, la docosyloxy-3 propylamine, le N-(octyloxy-3 propyl) diamino-1,3 propane, le N-(décyloxy-3 propyl) diamino-1,3 propane, la (triméthyl-2,4,6 décyl) oxy-3 propylamine et le N- (triméthyl-2,4,6 décyl) oxy-3 propyl

diamino-1,3 propane.

Le composé à fonction amine primaire mis en jeu dans la préparation des copolymères modifiés de l'invention peut aussi consister en un aminoalcool de formule (IV) :

$HO - R^{10} - NH_2$

où $R^{10}$ représente un radical aliphatique de préférence saturé, divalent, linéaire ou ramifié, de préférence sensiblement linéaire, ayant la définition donnée ci-avant.

On utilise de préférence des aminoalcools comportant une fonction alcool primaire.

Comme composés spécifiques, on peut citer à titre d'exemples :

la monoéthanolamine, l'amino-1 propanol-3, l'amino-1 butanol-4, l'amino-1 pentanol-5, l'amino-1 hexanol-6, l'amino-1 heptanol-7, l'amino-1 octanol-8, l'amino-1 décanol-10, l'amino-1 undécanol-11, l'amino-1 tridécanol-13, l'amino-1 tétradécanol-14, l'amino-1 hexadécanol-16, l'amino-2 méthyl-2 propanol-1, l'amino-2 butanol-1 et l'amino-2 pentanol-1.

Il doit être entendu qu'il est possible de mettre en jeu comme composé à fonction amine primaire un ou plusieurs composés répondant à la formule (III) et/ou un ou plusieurs composés répondant à la formule (IV).

Comme exemples spécifiques de mélange de composés à fonction amine primaire, on peut citer :

- les coupes d'amines grasses primaires dont les chaînes alkyles comportent, en proportions molaires approximatives données dans le tableau ci-après des chaînes en $C_8$, $C_{10}$, $C_{12}$, $C_{14}$, $C_{16}$, $C_{18}$, $C_{20}$ et $C_{22}$.

| chaines alkyles / Coupe | $C_8$ | $C_{10}$ | $C_{12}$ | $C_{14}$ | $C_{16}$ | $C_{18}$ | $C_{20}$ | $C_{22}$ |
|---|---|---|---|---|---|---|---|---|
| A | 0 | 0 | 0 | 1% | 28% | 71% | 0 | 0 |
| B | 0 | 0 | 0 | 1% | 5% | 42% | 12% | 40% |
| C* | 3% | 6% | 56% | 18% | 10% | 7% | 0 | 0 |

* La coupe C contient 5 % de chaine alkyle en $C_{18}$ insaturé et 2 % de chaine alkyle en $C_{18}$ saturé.

La réaction d'addition du composé à fonction amine primaire sur le polyester insaturé est habituellement effectuée par simple chauffage à une température habituellement d'environ 25 à 200 °C, de préférence de 40 à 160 °C et par exemple à environ 60 °C. La réaction est effectuée par addition du composé à fonction amine primaire au polyester insaturé dissous dans un solvant choisi par exemple parmi ceux mentionnés ci-dessus, et chauffage, à la température choisie, pendant un temps suffisant pour que le réaction soit substantiellement complète. La durée de la réaction entre le composé à fonction amine primaire et le polyester insaturé est habituellement d'environ 1 à 24 heures et le plus souvent d'environ 2 à 10 heures et par exemple environ 3 heures. La quantité de composé à fonction amine primaire mise en réaction est habituellement de 0,2 à 1,5 mole, de préférence de de 0,4 à 1,2 mole et de manière la plus préférée de 0,5 à 1,1 mole par mole de composé dicarboxylique mis en jeu dans la formation du polyester insaturé. La quantité de composé à fonction amine est par exemple d'environ 1 mole pour 1 mole de composé dicarboxylique.

Les polymères modifiés de la présente invention qui peuvent être avantageusement utilisés comme additifs dans les distillats moyens du pétrole sont ceux qui comportent des chaînes latérales pendantes sensiblement linéaires ayant au moins 8 atomes de carbone, de préférence au moins 10 atomes de carbone et d'une manière la plus préférée au moins 12 atomes de carbone, ladite chaîne pouvant comporter des atomes d'oxygène et/ou d'azote. Ces chaînes latérales peuvent provenir soit du composé

époxydé utilisé dans la préparation du polyester insaturé, soit du composé à fonction amine primaire mis en réaction avec le polyester insaturé, soit à la fois du composé époxydé et du composé à fonction amine primaire.

De préférence, les polymères modifiés selon l'invention utilisés comme additifs dans les distillats moyens sont ceux qui comportent des chaînes latérales pendantes ayant au moins 8 atomes de carbone et avantageusement au moins 10 atomes de carbone et d'une manière la plus préférée au moins 12 atomes de carbone, provenant à la fois du composé époxydé utilisé dans la préparation du polyester insaturé et du composé à fonction amine primaire mis en réaction avec la polyester insaturé.

Les polymères modifiés selon l'invention ont habituellement une masse moléculaire en nombre d'environ 400 à 20 000 et de préférence d'environ 500 à 10 000 et le plus souvent d'environ 500 à 7 000.

Les polymères modifiés préférés selon l'invention, tels qu'ils sont définis ci-dessus permettent d'avoir simultanément une amélioration du point de trouble et du point d'écoulement des distillats moyens de pétrole ce qui les rend particulièrement attractifs pour le raffineur.

Les additifs sont obtenus en solution dans le solvant choisi et peuvent être utilisés sous cette forme directement dans les distillats moyens de pétrole (par exemple dans les gazoles) dont on souhaite améliorer le point d'écoulement et le point de trouble.

Pour observer une nette amélioration simultanée du point de trouble et du point d'écoulement des coupes de gazoles considérées dans l'invention, et définies ci-après, il est nécessaire d'ajouter ces additifs à des concentrations allant par exemple de 0,001 à 2 % en poids et de préférence de 0,01 à 1 % en poids et plus avantageusement de 0,02 à 0,3 % en poids.

Les compositions de gazoles selon l'invention comprennent une proportion majeure de distillat moyen de pétrole ayant un intervalle de distillation selon la norme de distillation ASTM D 8667 se situant entre 150 et 450 °C (fuels-oils, gazoles) et une proportion mineure, suffisante pour en abaisser simultanément le point de trouble et le point d'écoulement, d'au moins un polymère modifié défini ci-avant.

Les gazoles considérés plus particulièrement ont un intervalle de distillation allant d'une température initiale d'environ 160 à 190 °C à une température finale d'environ 360 à 430 °C.

Les compositions de gazole comprenant une proportion majeure de distillat moyen et au moins un additif choisi parmi les polymères modifiés selon l'invention, définis ci-avant, en quantité suffisante pour en abaisser le point de trouble et le point d'écoulement, peuvent également comprendre d'autres additifs tels que par exemple des additifs antioxydants, des additifs dispersant les boues, des inhibiteurs de corrosion, etc...

Les compositions comprennent habituellement au moins 95 % et de préférence au moins 98 % en poids de distillat moyen.

L'abaissement du point d'écoulement peut aller, par exemple jusqu'à 15 °C ou plus. En outre, on observe simultanément un abaissement du point de trouble pouvant aller, par exemple, jusqu'à 2 °C ou plus.

Les polymères modifiés utilisés dans l'invention permettent, par leur action sur les phénomènes cinétiques de cristallisation, en particulier des paraffines, et sur la modification de la taille des cristaux qui se forment, l'emploi de la suspension à une température plus basse sans bouchage des canalisations, ni colmatage des filtres.

Lorsque les cristaux de paraffines dont la formation est provoquée par le refroidissement sont apparus, leur tendance naturelle est de se rassembler par gravité dans la partie basse. Ce phénomène, connu sous le terme de sédimentation, provoque le bouchage des canalisations et le colmatage des filtres et est préjudiciable à la bonne utilisation des distillats moyens et notamment des gazoles et fuels domestiques à basse température. Les polymères modifiés de l'invention diminuent la vitesse de sédimentation des paraffines formées par refroidissement des gazoles et autres distillats moyens ; les paraffines restant davantage en suspension se déposent moins sur les parois des conduites en contact avec les gazoles et autres distillats moyens, retardant ainsi le bouchage desdites conduites, et permettant d'utiliser un produit de caractéristiques données à une température nettement plus basse ou d'employer à une température donnée un produit, qui obtenu par la raffineur sans modification du schéma de distillation n'a pas initialement les spécifications requises ; spécifications qui évoluent actuellement dans le sens d'une plus grande sévérité.

Les exemples suivants illustrent l'invention sans en limiter la portée.

Dans les exemples, les coupes de gazoles utilisées sont celles qui figurent au tableau II ; elles sont caractérisées d'après la distillation ASTM D 8667, ces coupes de gazoles d'origine ARAMCO sont désignées par $G_1$ et $G_2$ ; leur masse volumique est également indiquée sur le tableau II.

Pour les coupes $G_1$ et $G_2$ sans additif et pour les compositions contenant un additif, deux déterminations ont été effectuées :

- le point de trouble suivant la norme ASTM D 2500-66
- le point d'écoulement suivant la norme ASTM D97-66.

TABLEAU II

| Gazoles | Distillation ASTM | | % distillé à 350 °C | Masse volumique à 15 °C en kg/l |
|---|---|---|---|---|
| | Pi °C | Pf °C | | |
| $G_1$ | 189 | 373 | 95 | 0,844 |
| $G_2$ | 177 | 373 | 92 | 0,836 |

Exemple 1 (comparatif)

On introduit dans un réacteur de 250 ml muni d'un réfrigérant et d'un système d'agitation, 14,7 g (0,15 mole) d'anhydride maléique, 19,5 g (0,15 équivalent molaire) de n-butoxy-1 époxy-2,3 propane et 17,6 g de xylène. On porte à 60 °C, puis on introduit 0,51 g de titanate de n-butyle et on maintient le mélange à 60 °C pendant 14 heures tout en agitant. On obtient un polyester insaturé sous forme d'un produit jaune qui peut être caractérisé par les moyens classiques d'analyse ; son spectre IR montre la disparition des bandes dues à l'anhydride maléique à 1850 $cm^{-1}$ et 1780 $cm^{-1}$ et l'apparition d'une forte bande ester à 1720 $cm^{-1}$.

Le polymère obtenu est dilué à 50 % en poids dans du xylène ; cette solution constitue la solution mère de l'additif A.

Exemples 2 à 4

On prépare de la même manière que dans l'exemple 1 la même solution du même polyester que celui décrit dans l'exemple 1 et on procède sur diverses parts de ce polyester insaturé à l'addition de composés présentant des fonctions amines primaires.

Exemple 2

Dans le réacteur contenant le polyester insaturé, dissous dans le xylène, on ajoute 42 g (0,15 équivalent molaire d'amine primaire) d'une coupe d'amines grasses primaires dont les chaines alkyles comportent en moyenne en moles 1 % de $C_{14}$, 28 % de $C_{16}$ et 71 % de $C_{18}$. Après 3 heures de chauffage à 60 °C tout en agitant, on obtient une solution d'un produit qui après évaporation du solvant peut être caractérisé par les moyens classiques d'analyse : sa masse moléculaire moyenne en nombre est de 6500, sa polydispersité est de 1,2 (mesurées par Chromatographie d'Exclusion Stérique (C.E.S)), le spectre R.M.N. montre la disparition de l'insaturation et confirme l'addition de l'amine sur la double liaison ; en spectrométrie infrarouge on note également la disparition de la bande correspondant à l'insaturation éthylénique du polymère de départ.

La solution obtenue est diluée de façon à obtenir une solution à 50 % en poids dans le xylène, du produit, qui constitue la solution mère de l'additif A1.

Exemple 3

La coupe d'amines grasses primaires additionnée au polyester est constituée d'amines primaires dont les chaines alkyles comprennent environ en moles 3 % de $C_8$ , 6 % de $C_{10}$, 56 % de $C_{12}$ , 18 % de $C_{14}$, 10 % de $C_{16}$, 2 % de $C_{18}$, et 5 % de $C_{18}$ insaturé. Le mode opératoire est en tous points itdentique à celui décrit dans l'exemple 2.

Les spectres IR et RMN du produit présentent les mêmes bandes caractéristiques que celles de l'additif A1. On obtient ainsi une solution de l'additif A2. L'additif A2 a une masse moléculaire moyenne en nombre de 4 700 et sa polydispersité est de 1,33 (mesurées par C.E.S.).

Exemple 4

La coupe d'amines grasses primaires additionnée au polyester est constituée d'amines primaires dont les chaines alkyles comprennent environ en moles 1 % de $C_{14}$, 5 % de $C_{16}$, 42 % de $C_{18}$, 12 % de $C_{20}$ et 40 % de $C_{22}$. Le mode opératoire est en tous points identique à celui décrit dans l'exemple 2. Les spectres IR et RMN du produit présentent les mêmes bandes caractéristiques que celles de l'additif A1. On obtient ainsi une solution de l'additif A3. L'additif $A_3$ une masse moléculaire moyenne en nombre de 6 300 et sa polydispersité est de 1,2 (mesurées par C.E.S).

Exemple 5 (comparatif)

On prépare de la même manière que dans l'exemple 1 un polyester insaturé qui diffère de celui de l'exemple 1 en ce que l'on emploie une coupe d'époxystéarate d'hexadécyle comme composé époxydé. Cette coupe a été obtenue par époxydation d'oléine (mélange d'acides gras insaturés dont la composition moyenne en poids est donnée dans le tableau I du texte de la présente demande) puis estérification du mélange d'époxy-acides obtenu par un mélange d'alcools comprenant en proportions pondérales approximatives 95 % d'alcool n-hexadécylique, 3 % d'alcool n-octadécylique et 2 % d'alcool ayant plus de 18 atomes de carbone dans leur molécule. On obtient après dilution à 50 % en poids dans du xylène une solution de l'additif B.

Exemples 6 à 9 :

On prépare de la même manière que dans l'exemple 5 la même solution du même polyester que celui décrit dans l'exemple 5 et on procède sur diverses parts de ce polyester insaturé à l'addition de composés présentant des fonctions amines primaires, en suivant le mode opératoire décrit dans l'exemple 2 et en respectant les proportions molaires de l'exemple 2. Les spectres infrarouge et R.M.N confirment la structure des produits et en particulier l'addition des composés aminés primaires sur la double liaison.

Exemple 6

L'amine primaire additionnée au polyester est la n-octadécylamine. On obtient ainsi une solution de l'additif B1.

Exemple 7

La coupe d'amines grasses primaires additionnée au polyester est constituée d'amines primaires dont les chaines alkyles comprennent environ en moles :1 % de $C_{14}$, 28 % de $C_{16}$ et 71 % de $C_{18}$. On obtient ainsi une solution de l'additif B2. L'additif B2 a une masse moléculaire moyenne en nombre de 2 800 et sa polydispersité est de 1,65 (mesurées par C.E.S.)

Exemple 8

La coupe d'amines grasses primaires additionnée au polyester est constituée d'amines primaires dont les chaines alkyles comprennent environ : 3 % de $C_8$, 6 % de $C_{10}$, 56 % de $C_{12}$, 18 % de $C_{14}$, 10 % de $C_{16}$, 2 % de $C_{18}$ et 5 % de $C_{18}$ insaturé. On obtient ainsi une solution de l'additif B3. L'additif B3 a une masse moléculaire moyenne en nombre de 2600 et sa polydispersité est de 1,72 (mesurées par C.E.S.).

Exemple 9

La coupe d'amines grasses primaires additionnée au polyester est constituée d'amines primaires dont les chaines alkyles comprennent environ en moles : 1 % de $C_{14}$, 5 % de $C_{16}$, 42 % de $C_{18}$, 12 % de $C_{20}$ et 40 % de $C_{22}$. On obtient ainsi une solution de l'additif B4. L'additif B4 a une masse moléculaire moyenne en nombre de 2 200 et sa polydispersité est de 2,15 (mesurées par C.E.S.).

Les additifs décrits ci-dessus sont obtenus en solution dans le xylène. La concentration des solutions est ajustée à 50 % poids de matière sèche, ce qui fournit les solutions mères de ces additifs dont on test l'activité en les incorporant à raison de 0,1 % en poids par rapport au gazole dont les caractéristiques ont été données dans le tableau II ci-avant.

Les résultats de ces déterminations sont rassemblés dans le tableau III ci-après. Ils montrent nettement l'amélioration simultanée du point de trouble et du point d' écoulement que permettent d'obtenir les polymères modifiés selon l'invention par rapport à un gazole sans additif et par rapport à l'emploi d'un polyester insaturé (A ou B) non modifié (exemple comparatif).

TABLEAU III

| Additifs % poids | Point de trouble (° C) | | Point d'écoulement (° C) | |
|---|---|---|---|---|
| | G1 | G2 | G1 | G2 |
| néant | - 1 | - 2 | - 9 | - 9 |
| 0,1 % A | - 1 | - 2 | - 9 | - 9 |
| 0,1 % A1 | - 2 | - 3 | - 12 | - 12 |
| 0,1 % A2 | - 3 | - 3 | - 15 | - 18 |
| 0,1 % A3 | - 3 | - 4 | - 12 | - 12 |
| 0,1 % B | - 1 | - 2 | - 9 | - 9 |
| 0,1 % B1 | - 3 | - 4 | - 12 | - 12 |
| 0,1 % B2 | - 3 | - 4 | - 12 | - 12 |
| 0,1 % B3 | - 2 | - 3 | - 24 | - 24 |
| 0,1 % B4 | - 3 | - 4 | - 15 | - 12 |

## Revendications

**1.** Polymère de masse moléculaire moyenne en nombre de 400 à 20 000 comportant des groupes amino-substitués dans sa molécule, caractérisé en ce qu'il résulte de la réaction d'au moins un composé à fonction amine primaire comprenant de 1 à 61 atomes de carbone dans sa molécule et répondant à l'une des formules générales :

$$R^9 - Z{-}[(CH_2)_n - NH]_m - H \qquad (III)$$

et

$$HO - R^{10} - NH_2 \qquad (IV)$$

dans lesquelles $R^9$ représente un groupe aliphatique ayant de 1 à 60 atomes de carbone, Z est choisi parmi les groupes -O-, -NH-, $-NR^{11}-$, dans lesquels $R^{11}$ représente un groupe aliphatique ayant de 1 à 60 atomes de carbone, n est un nombre entier de 2 à 4, m est zéro lorsque Z est -NH- ou un nombre entier de 1 à 4 dans tous les cas, $R^{10}$ représente un groupe aliphatique divalent ayant de 2 à 61 atomes de carbone, sur un polyester insaturé résultant de la condensation d'au moins un composé dicarboxylique insaturé comportant au moins une insaturation éthylénique en alpha de l'un des groupes carboxyliques sur au moins un composé époxydé ayant de 4 à 62 atomes de carbone et répondant à l'une des formules générales

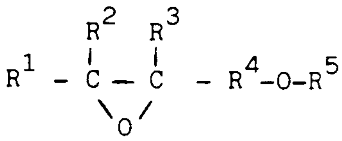 (I) et

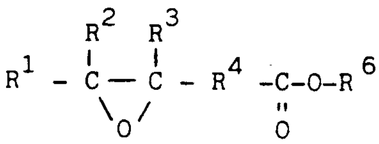 (II)

dans lesquelles $R^1$ et $R^3$, identiques ou différents, représentent chacun un atome d'hydrogène ou un groupe alkyle inférieur ayant de 1 à 4 atomes de carbone, $R^2$ représente un atome d'hydrogène, un groupe alkyle ayant de 1 à 57 atomes de carbone ou un groupe aliphatique comportant 1 ou plusieurs cycles oxirannes et ayant de 3 à 57 atomes de carbone, $R^4$ représente un groupe alkylène ayant de 1 à 57 atomes de carbone, $R^5$ représente un groupe alkyle ayant de 1 à 57 atomes de carbone ou un groupe alkanoyle de formule

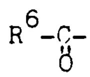 ,

$R^6$ représentant dans ces formules un groupe alkyle ayant de 1 à 56 atomes de carbone, le rapport molaire composé époxydé/composé dicarboxylique étant d'environ 0,4:1 à 1,8:1 et le rapport molaire composé à fonction amine primaire/composé dicarboxylique étant d'environ 0,2:1 à 1,5:1.

**2.** Polymère selon la revendication 1, dans lequel le composé dicarboxylique est choisi parmi les anhydrides d'acides dicarboxyliques monoinsaturés ayant de 4 à 8 atomes de carbone dans leur molécule.

**3.** Polymère selon la revendication 1 ou 2 dans lequel le composé époxydé est un composé répondant à l'une des formules générales (I) ou (II) dans lesquelles $R^1$ et $R^3$ représentent chacun un atome d'hydrogène.

**4.** Polymère selon la revendication 1 ou 2 dans lequel le composé époxydé est un composé répondant à l'une des formules générales (I) ou (II) dans lesquelles $R^1$, $R^2$ et $R^3$ représentent chacun un atome d'hydrogène.

**5.** Polymère selon l'une des revendications 1 à 4 dans lequel le composé époxydé est un composé répondant à la formule générale (I) dans laquelle $R^4$ est un groupe méthylène.

**6.** Polymère selon l'une des revendications 1 à 4 dans lequel le composé époxydé est un composé répondant à la formule générale (II) dans laquelle $R^4$ est un groupe alkylène ayant de 4 à 24 atomes de carbone.

**7.** Polymère selon l'une des revendications 1 à 6 dans lequel le composé à fonction amine primaire est une monoalkylamine primaire sensiblement linéaire ayant de 6 à 46 atomes de carbone.

**8.** Composition de distillat moyen de pétrole caractérisée en ce qu'elle comprend une proportion majeure de distillat moyen ayant un intervalle de distillation entre 150 et 450 °C et une proportion de 0,001 à 2% en poids d'au moins un polymère selon l'une des revendications 1 à 7, ledit polymère comportant des chaînes latérales sensiblement linéaires ayant au moins 8 atomes de carbone.

**9.** Composition de distillat moyen selon la revendication 8 caractérisée en ce que le distillat moyen consiste en une coupe de gazole ayant un intervalle de distillation allant d'une température initiale d'environ 160 à 190 °C à une température finale d'environ 360 à 430 °C.

## Claims

1. Polymer of average molecular weight ranging from 400 to 20 000 comprising amino-substituted groups in its molecule wherein it results from reaction of at least compound with a primary amine function, comprising 1 to 61 carbon atoms in its molecule and having one of the general formulae:

$$R^9 - Z - [(CH_2)_n - NH]_m - H \qquad (III)$$

and

$$HO - R^{10} - NH_2 \qquad (IV)$$

in which $R^9$ represents an aliphatic group having 1 to 60 carbon atoms, Z is chosen from the groups -O-, -NH-, $-NR^{11}-$, in which $R^{11}$ represents an aliphatic group having 1 to 60 carbon atoms, n is a whole number from 2 to 4, m is zero when Z is -NH- or a whole number from 1 to 4 in all cases, $R^{10}$ represents a bivalent aliphatic group having 2 to 61 carbon atoms, with an unsaturated polyester resulting from the condensation of at least one unsaturated dicarboxylic compound comprising at least one ethylenic unsaturation in the alpha position of one of the carboxyl groups with at least one epoxidated compound having 4 to 62 carbon atoms and having one of the general formulae

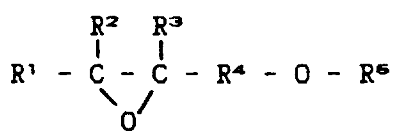 (I)

and 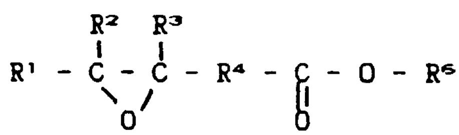 (II)

in which $R^1$ and $R^3$, identical or different, each represent a hydrogen atom or a lower alkyl group having 1 to 4 carbon atoms, $R^2$ represents a hydrogen atom, an alkyl group having 1 to 57 carbon atoms or an aliphatic group comprising 1 or more oxirane cycles and having 3 to 57 carbon atoms, $R^4$ represents an alkylene group having 1 to 57 carbon atoms, $R^5$ represents an alkyl group having 1 to 57 carbon atoms or an alkanoyl group of formula

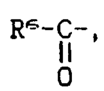

$R^6$ in these formulae representing an alkyl group having 1 to 56 carbon atoms, the epoxidated compound/dicarboxylic compound molar ratio being from about 0.4:1 to 1.8:1 and the compound with a primary amine function/dicarboxylic compound molar ratio being from about 0.2:1 to 1.5:1.

2. Polymer according to claim 1 wherein the dicarboxylic compound is chosen from the anhydrides of mono-unsaturated dicarboxylic acids having 4 to 8 carbon atoms in their molecule.

3. Polymer according to claim 1 or 2 wherein the epoxidated compound is a compound having one of the general fomulae (I) or (II), in which $R^1$ and $R^3$ each represent a hydrogen atom.

4. Polymer according to claim 1 or 2 wherein the epoxidated compound is a compound having one of the general fomulae (I) or (II), in which $R^1$, $R^2$ and $R^3$ each represent a hydrogen atom.

5. Polymer according to one of claims 1 to 4 wherein the epoxidated compound is a compound of general formula (I), in which $R^4$ is a methylene group.

6. Polymer according to one of claims 1 to 4 wherein the epoxidated compound is a compound of general formula (II), in which $R^4$ is an alkylene group having 4 to 24 carbon atoms.

7. Polymer according to one of claims 1 to 6 wherein the compound with a primary amine function is a substantially linear primary monoalkylamine having 6 to 46 carbon atoms.

8. Petroleum middle distillate composition comprising a major proportion of middle distillate having a distillation range between 150 and 450° C and a proportion, from 0.001 to 2% in weight of at least one polymer according to one of claims 1 to 7, said polymer comprising substantially linear side chains having at least 8 carbon atoms.

9. Middle distillate composition according to claim 8 wherein the middle distillate consists of a gas oil cut having a distillation range from an initial temperature of about 160 to 190° C to a final temperature of about 360 to 430° C.

**Patentansprüche**

1. Polymeres mit einer durchschnittlichen Molmasse einer Zahl von 400 bis 20.000, welches aminosubstituierte Gruppen im Molekül enthält, dadurch gekennzeichnet, daß es aus der Umsetzung wenigstens einer Verbindung mit primärer Aminfunktion resultiert, welche 1 bis 61 Kohlenstoffatome im Molekül umfaßt und einer der allgemeinen Formeln

$$R^9 - Z\{(CH_2)_n - NH\}_m H \qquad (III)$$

und

$HO - R^{10} - NH_2$ (IV)

entspricht, worin $R^9$ eine aliphatische Gruppe mit 1 bis 60 Kohlenstoffatomen bedeutet, Z aus den Gruppen -O-, -NH-, -$NR^{11}$-, worin $R^{11}$ eine aliphatische Gruppe mit 1 bis 60 Kohlenstoffatomen bedeutet, ausgewählt ist, n eine ganze Zahl zwischen 2 und 4 ist, m Null ist, wenn Z die Bedeutung -NH-hat oder in allen Fällen eine ganze Zahl zwischen 1 und 4 ist, $R^{10}$ eine divalente aliphatische Gruppe mit 2 bis 61 Kohlenstoffatomen ist, auf einem ungesättigten Polyester, welcher aus der Kondensation wenigstens einer ungesättigten Dicarboxylverbindung resultiert, welche wenigstens eine ethylenische Unsättigung in α-Position einer der Carboxylgruppen enthält, auf wenigstens einer epoxidierten Verbindung, welche 4 bis 62 Kohlenstoffatome besitzt und einer der allgemeinen Formeln

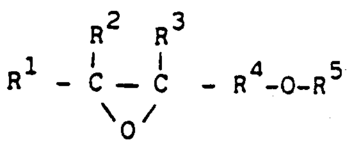 (I) **und**

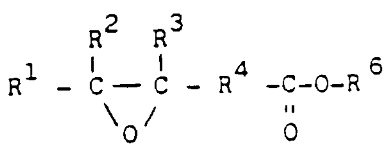 (II)

entpricht, worin $R^1$ und $R^3$, gleich oder verschieden voneinander, jeder ein Wasserstoffatom bedeuten oder eine Niederalkylgruppe mit 1 bis 4 Kohlenstoffatomen, $R^2$ ein Wasserstoffatom, eine Alkylgruppe mit 1 bis 57 Kohlenstoffatomen oder eine aliphatische Gruppe, welche einen oder mehrere Oxiranringe mit 3 bis 57 Kohlenstoffatomen enthält, bedeutet, $R^4$ eine Alkylengruppe mit 1 bis 57 Kohlenstoffato-

men bedeutet, $R^5$ eine Alkylgruppe mit 1 bis 57 Kohlenstoffatomen oder eine Alkanoylgruppe der Formel

$$R^6-\underset{|}{C}=O$$

bedeutet, wobei $R^6$ in diesen Formeln eine Alkylgruppe mit 1 bis 56 Kohlenstoffatomen ist, und wobei das Molverhältnis Epoxidverbindung/Dicarboxylverbindung etwa 0,4:1 bis 1,8:1 und das Molverhältnis Verbindung mit primärer Aminfunktion/Dicarboxylverbindung etwa 0,2:1 bis 1,5:1 beträgt.

**2.** Polymeres nach Anspruch 1, worin die Dicarboxylverbindung unter den Anhydriden einfach-ungesättigter Dicarbonsäuren mit 4 bis 8 Kohlenstoffatomen ausgewählt ist.

**3.** Polymeres nach Anspruch 1 oder 2, worin die Epoxidverbindung eine Verbindung ist, welche einer der allgemeinen Formeln (I) oder (II) entspricht, worin $R^1$ und $R^3$ beide ein Wasserstoffatom bedeuten.

**4.** Polymeres nach Anspruch 1 oder 2, worin die Epoxidverbindung eine Verbindung ist, welche einer der allgemeinen Formeln (I) oder (II) entspricht, worin $R^1$, $R^2$ und $R^3$ jeweils ein Wasserstoffatom bedeuten.

**5.** Polymeres nach einem der Ansprüche 1 bis 4, worin die Epoxidverbindung eine Verbindung ist, welche der allgemeinen Formel (I) entspricht, worin $R^4$ eine Methylengruppe ist.

**6.** Polymeres nach einem der Ansprüche 1 bis 4, worin die Epoxidverbindung eine Verbindung ist, welche der allgemeinen Formel (II) entspricht, worin $R^4$ eine Alkylengruppe mit 4 bis 24 Kohlenstoffatomen ist.

**7.** Polymeres nach einem der Ansprüche 1 bis 6, worin die Verbindung mit primärer Aminfunktion ein im wesentlichen lineares primäres Monoalkylamin mit 6 bis 46 Kohlenstoffatomen ist.

**8.** Erdölmitteldestillatzusammensetzung, dadurch gekennzeichnet, daß sie einen Hauptanteil an Mitteldestillat mit einem Destillationsintervall zwischen 150 und 450 °C und einen Anteil von 0,001 bis 2 Gew.% wenigstens eines Polymeren nach einem der Ansprüche 1 bis 7 umfaßt, wobei dieses Polymere im wesentlichen lineare Seitenketten mit wenigstens 8 Kohlenstoffatomen enthält.

**9.** Mitteldestillatzusammensetzung nach Anspruch 8, dadurch gekennzeichnet, daß das Mitteldestillat aus einem Gasölschnitt besteht, welcher ein Destillationsintervall aufweist, das von einer Anfangstemperatur von etwa 160 bis 190 °C bis zu einer Endtemperatur von etwa 360 bis 430 °C geht.